# FASCICULE DE BREVET EUROPEEN

(11) **EP 1 479 443 B1**
(45) Date de publication et mention de la délivrance du brevet: **09.11.2005**
(21) Numéro de dépôt: 03011337.7
(22) Date de dépôt: 19.05.2003
(51) Int. Cl.: B04B 1/20, B04B 9/04

(54) **Système d'entraînement d'une centrifugeuse**
Antriebssystem von einer Zentrifuge
Drive system of a centrifugal separator

(43) Date de publication de la demande: 24.11.2004
(73) Titulaire: ANDRITZ-GUINARD S.A.S., 78140 Vélizy (FR)
(72) Inventeur: Gilbert, Luc, 78140 Vélizy (FR)
(74) Mandataire: Bloch, Gérard

(56) Documents cités:
- DE-A- 2 131 087
- DE-A- 3 834 222
- FR-A- 2 070 485
- US-A- 4 120 447
- US-A- 5 037 372

## Description

La présente demande concerne les systèmes d'entraînement de machines tournantes et, plus particulièrement, de centrifugeuses.

Les centrifugeuses sont couramment utilisées dans des opérations de séparation d'un liquide et d'un solide de densités différentes, de purification d'un liquide, de classification de divers solides en suspension dans un liquide, de déshydratation d'un solide, etc.

Les centrifugeuses comportent en général une enceinte, appelée bol, dans laquelle on introduit le mélange solide-liquide, ainsi qu'une vis sans fin s'étendant dans le bol suivant son axe. Le bol et la vis sont entraînées en rotation à des vitesses différentes afin d'effectuer les opérations précitées.

Dans les centrifugeuses classiques, le bol peut être entraîné en rotation par un moteur électrique asynchrone par le biais d'une courroie, la vis étant entraînée à l'aide d'un deuxième moteur couplé à un réducteur de vitesse. Les deux moteurs sont en général couplés en fréquence par divers moyens bien connus.

Toutefois, dans de telles centrifugeuses, la présence d'une courroie entraîne des vibrations et des glissements au niveau des contacts entre la courroie et les arbres d'entraînement, tandis que l'encombrement en volume et en poids de tels systèmes peut être rédhibitoire. Les moteurs électriques asynchrones sont de plus sujets à des glissements de fréquence.

Il est en outre préférable, dans certaines applications, d'utiliser des centrifugeuses de grande longueur et de faible diamètre. Un inconvénient de telles structures est l'effet de flexion qui peut apparaître sur le dispositif. Cet effet de flexion est notamment accentué par la vitesse de rotation ainsi que par la présence de courroies entre les axes menants et les axes menés, ces courroies exerçant sur les axes de rotation une force qui leur est perpendiculaire. Les courroies sont donc un obstacle à l'augmentation de la vitesse de rotation des centrifugeuses.

Le document US 4,120,447 propose de prévoir, sur une centrifugeuse, deux moteurs d'entraînement, du bol et de la vis, situés du même côté de la centrifugeuse, dont les axes d'entraînement sont confondus avec l'axe de rotation du bol. L'effet de flexion susmentionné est aussi réduit. Toutefois, dans cette centrifugeuse, les deux moteurs sont situés l'un derrière l'autre dans un boîtier ; par conséquent, il existe un effet de porte-à-faux préjudiciable aux vibrations de la centrifugeuse et qui ne permet pas de résoudre complètement le problème de flexion. L'encombrement du dispositif est par ailleurs assez important.

La présente invention vise à s'affranchir des inconvénients énoncés cidessus.

A cet effet, l'invention concerne tout d'abord une centrifugeuse telle que définie dans la revendication 1.

Comme déjà abordé plus haut, la demanderesse n'entend pas pour autant limiter la portée de ses droits à une centrifugeuse avec un bol et une vis sans fin. Le bol étant une enceinte et la vis sans fin, un arbre pourvu d'un filet de vis extérieur, la présente demande concerne plus généralement une machine tournante comportant une enceinte et un arbre, montés l'un dans l'autre rotatifs autour d'un même axe, un premier moteur d'entraînement de l'enceinte, un second moteur d'entraînement de l'arbre, caractérisée par le fait que les axes des moteurs et l'axe de rotation de l'enceinte et de l'arbre sont confondus.

L'invention sera mieux comprise à l'aide de la description suivante de plusieurs formes de réalisation de la centrifugeuse de l'invention, en référence au dessin annexé, sur lequel :
- la figure 1 représente une vue de profil partiellement en coupe, et avec arraché, d'une première forme de réalisation de la centrifugeuse de l'invention ;
- la figure 2 représente un schéma structurel en coupe des moteurs, des arbres du bol et de la vis et du réducteur d'une variante de réalisation de la centrifugeuse de l'invention ;
- la figure 3 représente une vue de profil partiellement en coupe d'une troisième forme de réalisation de la centrifugeuse de l'invention ;
- la figure 4 représente une vue de profil partiellement en coupe d'une quatrième forme de réalisation de la centrifugeuse de l'invention et
- la figure 5 représente une vue de profil partiellement en coupe d'une cinquième forme de réalisation de la centrifugeuse de l'invention.

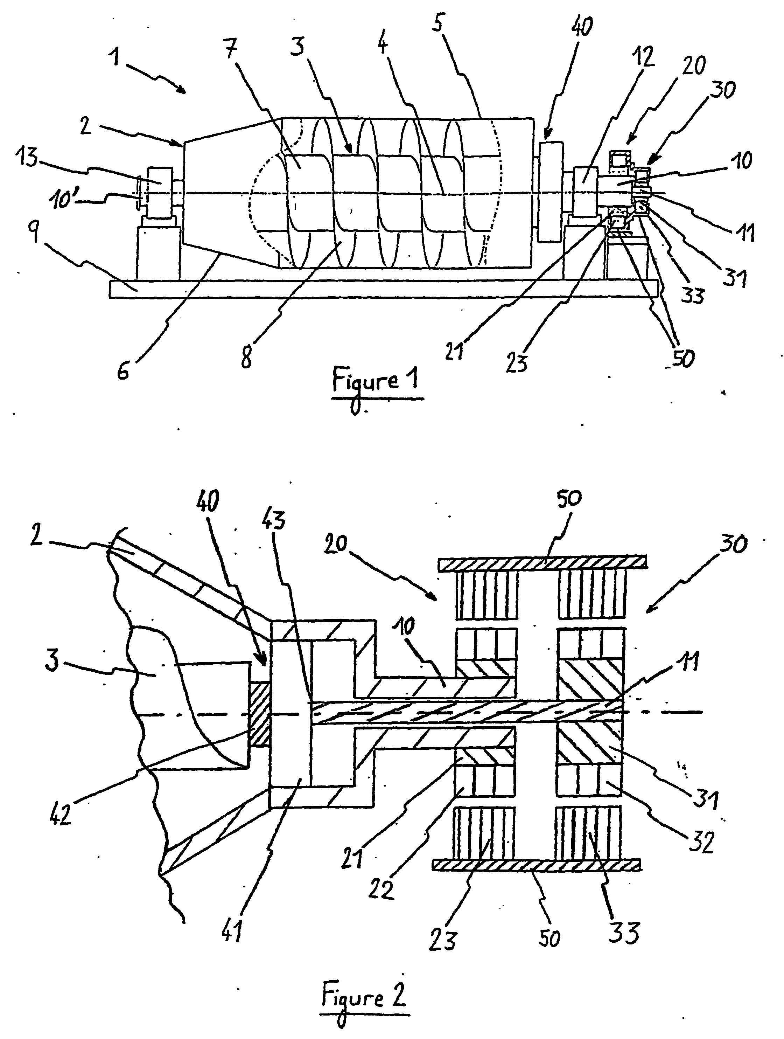

En référence à la figure 1, la centrifugeuse 1 de l'invention comprend une enceinte 2, appelée bol, et une vis sans fin 3, montés l'un dans l'autre rotatifs autour d'un axe 4. Ainsi, la vis 3 s'étend à l'intérieur du bol 2, dans la direction de l'axe 4. Le bol 2 de invention présente globalement une symétrie de révolution autour de l'axe 4. Structurellement, il comprend un fût 5 de forme sensiblement cylindrique et une tête 6 de forme sensiblement tronconique. La vis 3 se présente sous la forme d'un arbre cylindrique 7 pourvu d'un filetage 8 hélicoïdal extérieur autour de l'arbre 7. La centrifugeuse 1 est montée sur une semelle 9.

A l'arrière du bol 2, c'est-à-dire à la base de son fût 5, à l'opposé de la tête 6, s'étend un arbre 10 tubulaire, d'entraînement du bol 2, solidaire de ce dernier. Cet arbre 10 est entraîné en rotation, par un moteur 20, autour de l'axe 4.

A l'intérieur de l'arbre 10, et concentriquement à ce dernier, s'étend un arbre 11, d'entraînement de la vis 3. Cet arbre 11 est entraîné en rotation, par un moteur 30, autour de l'axe 4.

Un palier fixe 12 supporte l'arbre 10, du côté du fût 5 du bol 2. Du côté de la tête 6 du bol 2, un palier 13 supporte un arbre 10' également solidaire du bol 2, mais ici de façon flottante, afin de pouvoir compenser une éventuelle élongation du bol 2 due à une augmentation de chaleur, par exemple. On pourrait évidemment inverser la disposition des paliers.

Les deux moteurs 20, 30 d'entraînement du bol 2 et de la vis 3, respectivement, sont contenus dans un même carter 50. Cette configuration est possible du fait que les moteurs d'entraînement 20, 30 sont ici des moteurs sans arbre menant, la forme annulaire de leur rotor permettant d'y insérer directement l'arbre mené de l'une des deux parties rotatives, donc en particulier de placer les deux moteurs en ligne, les arbres des parties rotatives étant concentriques.

La structure des moteurs d'entraînement 20, 30 utilisés dans la centrifugeuse de l'invention va maintenant être expliquée plus en détail, en référence à la figure 2.

Les moteurs d'entraînement 20, 30 sont donc ici des moteurs de type synchrone à aimants permanents. Ainsi, chaque moteur 20, 30 possède un rotor annulaire 21, 31, respectivement, sur lequel sont montés solidaires des aimants permanents 22, 32, respectivement. Autour des aimants sont disposés des bobinages 23, 33, respectivement, dans lesquels passe un courant continu : le phénomène d'induction provoque alors la rotation des aimants 22, 23 et donc des rotors 21, 31. Les bobinages 23, 33 sont fixés au même carter 50.

On peut noter deux types de structures équivalentes pour le carter 50 contenant les deux moteurs 20, 30. En référence à la figure 1, les bobinages 23, 33 peuvent ne pas se trouver à la même distance radiale de l'axe 4, auquel cas le carter 50 est adapté au décalage existant entre les bobinages 23, 33, mais reste usiné comme une enveloppe unique. En référence à la figure 2, les rotors 21, 31 peuvent être dimensionnés de façon à ce que les périphéries respectives des aimants 22, 32 se trouvent à la même distance radiale de l'axe 4, ce qui permet, en utilisant des bobinages 23, 33 de même épaisseur radiale, d'utiliser un carter 50 cylindrique sur toute sa longueur de support des deux bobinages 23, 33. Ces configurations ne sont données qu'à titre d'exemple et il va de soi qu'il est possible d'imaginer tout autre type de configuration dans laquelle les moteurs 20, 30 sont alignés et supportés par le même carter 50.

L'arbre 10 d'entraînement du bol 2 est emmanché dans le rotor 21 du moteur 20 d'entraînement du bol 2. L'arbre 11 d'entraînement de la vis 3 est emmanché dans le rotor 31 du moteur 30 d'entraînement de la vis 3. Le moteur 30 d'entraînement de la vis 3 est placé à l'arrière, par rapport à la centrifugeuse 1, du moteur 20 d'entraînement du bol 2. Ainsi, l'arbre 11 d'entraînement de la vis 3 s'étend concentriquement à l'intérieur de l'arbre tubulaire 10 d'entraînement du bol 2.

Entre le bol et la vis, d'une part, et leurs arbres d'entraînement 10, 11 respectifs, d'autre part, est placé un réducteur 40. Ce réducteur 40 est ici composé d'une couronne extérieure 41, d'un "point" d'entrée 43 pour un arbre, d'un mécanisme d'engrenage, ici, un train cycloïdal ou épicycloïdal, non représenté, composé notamment d'excentriques, de planétaires et de rouleaux, et d'un axe de sortie 42. Ce type de réducteur est bien connu et utilisé couramment dans les centrifugeuses classiques. Sa structure ne sera donc pas détaillée ici et on pourra se référer au brevet FR 1, 090, 292 pour plus de précisions sur la structure de ce type de réducteur.

L'arbre 10 d'entraînement du bol 2 est directement emmanché d'une part dans le rotor 21 du moteur 20 d'entraînement du bol 2 et monté d'autre part sur la couronne extérieure 41 du réducteur 40. L'arbre 11 d'entraînement de la vis 3 est emmanché, d'une part, dans le rotor 31 du moteur 30 d'entraînement de la vis 3, d'autre part, dans le point d'entrée 43 du réducteur 40. Le bol 2 est solidaire de la couronne extérieure 41 du réducteur 40 et la vis 3 de son axe de sortie 42. Il existe une relation entre la vitesse de rotation du moteur 20 d'entraînement du bol 2, la vitesse de rotation du moteur 30 d'entraînement de la vis 3, la vitesse de rotation du bol 2, qui est ici identique à celle de son moteur d'entraînement 20, la vitesse de rotation de la vis 3, et enfin des paramètres constants dépendant de la géométrie du réducteur 40. Cette relation dépend du réducteur utilisé et permet, grâce aux deux moteurs d'entraînement 20, 30, de régler les vitesses de rotation du bol 2 et de la vis 3.

Il est en outre prévu un couplage entre les deux moteurs d'entraînement 20, 30. Chaque moteur est relié à un variateur de fréquence, ou convertisseur de fréquence ; ces variateurs de fréquence ne sont pas représentés. Les variateurs sont reliés entre eux par un bus continu. Ce montage permet d'asservir les moteurs entre eux, et de ce fait de contrôler les vitesses relatives du bol 2 et de la vis 3. Il est ainsi possible d'adapter ces vitesses à l'utilisation qui est faite de la centrifugeuse 1.

L'ensemble des relations entre les divers éléments de la centrifugeuse 1 sont bien connues et déjà utilisées dans les centrifugeuses classiques, et ne seront donc pas approfondies. L'invention réside dans l'alignement des moteurs 20, 30 rendu possible grâce à l'utilisation de moteurs 20, 30 sans arbres menants, dans lesquels viennent s'emmancher les arbres 10, 11 d'entraînement du bol 2 et de la vis 3, concentriques dans cette forme de réalisation. L'utilisation ici de moteurs 20, 30 synchrones à aimants permanents est avantageuse à bien des égards : elle permet une meilleure compacité des moteurs, une plus grande souplesse d'utilisation, une meilleure précision sur la mesure de leurs vitesses, un fonctionnement à des vitesses plus importantes, une résistance à des couples plus grands, ... Ces avantages s'ajoutent à ceux qui sont inhérents à l'alignement des axes d'entraînement des moteurs 20, 30 avec l'axe d'inertie du bol 2 et de la vis 3.

Le mode de fonctionnement de la centrifugeuse 1 de l'invention va maintenant être décrit plus précisément.

Dans une première phase de démarrage, seuls le moteur 20 d'entraînement du bol 2 est mis en marche, afin de mettre le bol 2 en rotation. Le couple nécessaire est important, car il faut mettre en mouvement à la fois les divers éléments de la centrifugeuse 1 mais aussi les matières qu'elle contient.

Dans une seconde phase, le moteur 30 d'entraînement de la vis 3 est également mis en marche, afin de mettre la vis 3 en rotation, ce qui nécessite un couple supplémentaire.

Une fois le régime permanent établi, le moteur 30 d'entraînement de la vis 3 peut être employé comme génératrice. L'énergie ainsi emmagasinée dans le moteur 30 d'entraînement de la vis 3 est redirigée vers le moteur 20 d'entraînement du bol 2, via les convertisseurs de fréquence et le bus continu. Le fonctionnement de la centrifugeuse 1 de l'invention ne sera pas ici plus détaillé, car il est bien connu pour les centrifugeuses classiques.

La présence du réducteur 40 est bénéfique ; sans lui, le couple sur l'arbre 11 d'entraînement de la vis 3 serait très grand. En effet, les forces de friction entre la vis 3 et le bol 2, par le biais de la matière contenue dans la centrifugeuse 1, et en raison des vitesses mises en jeu, sont très grandes.

D'autres formes de réalisation de la centrifugeuse 1 de l'invention sont possibles et vont maintenant être décrites. Leur fonctionnement est à chaque fois comparable à celui qui a été décrit précédemment, seul l'agencement des éléments entre eux est changé. Les références numériques utilisées pour désigner les divers éléments sont conservées pour désigner des éléments identiques fonctionnellement ou structurellement dans les diverses formes de réalisation.

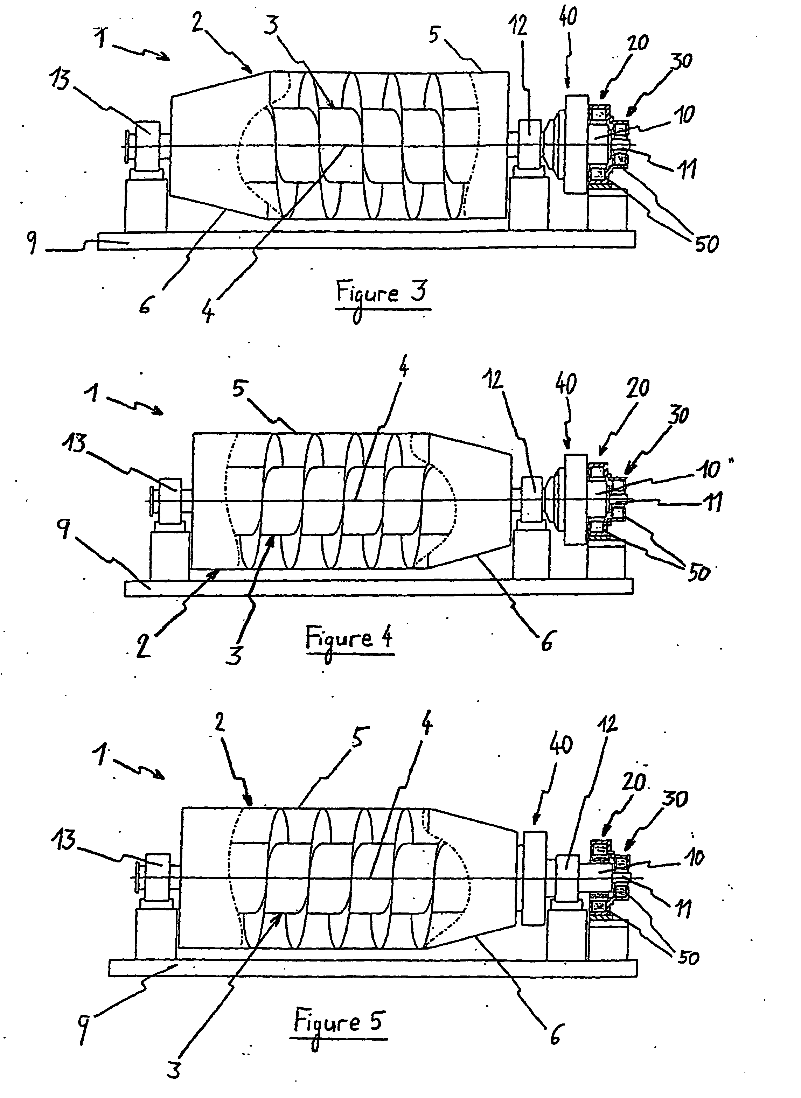

Dans les formes de réalisations représentées sur les figures 3, 4 et 5, les moteurs 20, 30 sont, de la même façon que dans la première forme de réalisation, contenus dans le même carter 50.

Dans la forme de réalisation de la centrifugeuse 1 représentée sur la figure 3, le palier de soutien fixe 12, qui était placé entre le réducteur 40 et les moteurs 20, 30 dans la première forme de réalisation, est maintenant placé entre le réducteur 40 et le fût 5 du bol 2. Les autres éléments de la centrifugeuse sont en tous points comparables à ceux de la première forme de réalisation. L'arbre 10 d'entraînement du bol 2 est toujours emmanché d'un côté dans le moteur 20 d'entraînement du bol 2 et monté de l'autre côté sur la couronne extérieure 41 du réducteur, le bol 2 étant solidaire de cette couronne extérieure 41. L'arbre 11 d'entraînement de la vis 3 est toujours emmanché d'un côté dans le moteur 30 d'entraînement de la vis 3 et de l'autre dans le point d'entrée 43 du réducteur 40, la vis 3 étant solidaire de l'axe de sortie 42 du réducteur 40.

La forme de réalisation de la centrifugeuse 1 représentée sur la figure 4 est en tous points similaire à celle de la figure 3, à la différence que le bol 2 est placé dans le sens contraire, à savoir, la tête 6 et le fût 5 sont inversés, la tête 6 se trouvant donc du côté des moteurs. La structure et le fonctionnement de la centrifugeuse 1 sont, en dehors de cet aspect, comparables à ceux de la centrifugeuse 1 de la figure 3.

La forme de réalisation de la centrifugeuse 1 représentée sur la figure 5 est en tous points comparable à celle de la figure 1, à la différence, de la même façon que précédemment, que le bol 2 est placé dans le sens contraire, les positions de la tête 6, d'une part, et du fût 5, d'autre part, étant inversées, par rapport aux autres éléments de la centrifugeuse 1.

## Revendications

1. Machine tournante (1) comportant une enceinte (2) et un arbre (3), montés l'un dans l'autre rotatifs autour d'un même axe (4), un premier moteur (20) d'entraînement de l'enceinte (2), un second moteur (30) d'entraînement de l'arbre (3), les axes des moteurs (20, 30) et l'axe (4) de rotation de l'enceinte (2) et de l'arbre (3) étant confondus, dans laquelle les moteurs (20, 30) sont placés d'un même côté de la machine tournante (1), **caractérisée par le fait que** les moteurs d'entraînement (20, 30) sont des moteurs synchrones à aimants permanents (22, 32), sont contenus dans un même carter (50) et les arbres (10, 11) d'entraînement de l'enceinte (2) et de l'arbre (3), concentriques, sont directement emmanchés dans les rotors (21, 31) de leurs moteurs d'entraînement (20, 30)

2. Machine tournante (1) selon la revendication 1, cette machine tournante étant une centrifugeuse (1), dans laquelle l'enceinte (2) est un bol (2) et l'arbre (3) est une vis sans fin (3).

## Patentansprüche

1. Umlaufende Maschine (1) mit einer Umhüllung (2) und einer Welle (3), die, um dieselbe Achse (4) drehbar, in einander montiert sind, einem ersten Antriebsmotor (20) für die Umhüllung (2), einem zweiten Antriebsmotor (30) für die Welle (3), wobei die Achsen der Motoren (20, 30) und die Drehachse (4) der Umhüllung (2) und der Welle (3) zusammenfallen und wobei die Motoren (20, 30) auf derselben Seite der umlaufenden Maschine (1) angeordnet sind,
**dadurch gekennzeichnet, daß** die Antriebsmotoren (20, 30) Synchronmotoren mit Permanentmagneten (22, 32) und in demselben Gehäuse (50) eingebaut sind, und daß die Antriebswellen (10, 11) der Umhüllung (2) und der Welle (3) konzentrisch ausgerichtet, direkt an die Rotoren (21, 31) ihrer Antriebsmotoren (20, 30) angeschlossen sind.

2. Umlaufende Maschine (1) nach Anspruch 1, **dadurch gekennzeichnet, daß** sie eine Zentrifuge (1) ist, bei der die Umhüllung (2) ein Mantel (2) und die Welle (3) eine Förderschnecke (3) ist.

## Claims

1. Rotating machine (1) comprising an enclosure (2) and a shaft (3), mounted the one inside the other rotating about the same axis (4), a first motor (20) for driving the enclosure (2) and a second motor (30) for driving the shaft (3), the axes of the motors (20, 30) and the rotational axis (4) of the enclosure and of the shaft (3) being merged, in which the motors (20, 30) are positioned on the same side of the rotating machine (1), **characterised in that** the drive motors (20, 30) are synchronous motors with permanent magnets (22, 32) and are contained in the same casing (50), and the drive shafts (10, 11) of the enclosure (2) and of the shaft (3), which are concentric, are directly fitted into the rotors (21, 31) of their drive motors (20, 30).

2. Rotating machine (1) according to claim 1, this rotating machine being a centrifugal separator (1) in which the enclosure (2) is a bowl (2) and the shaft (3) is an endless screw (3).
